(19)

**Europäisches Patentamt**
**European Patent Office**
**Office européen des brevets**

(11) **EP 3 093 629 A1**

(12) **EUROPEAN PATENT APPLICATION**

(43) Date of publication:
**16.11.2016 Bulletin 2016/46**

(21) Application number: **15382246.5**

(22) Date of filing: **12.05.2015**

(51) Int Cl.:
*G01F 25/00* (2006.01)   *A01K 5/02* (2006.01)
*G01F 11/46* (2006.01)   *G01F 15/00* (2006.01)
*B65B 37/20* (2006.01)   *G01G 19/00* (2006.01)
*G01F 13/00* (2006.01)   *G01F 15/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Exafan, S.A.**
  **50840 San Mateo de Gallego (Zaragoza) (ES)**

• **Universitat de Lleida**
  **25003 Lleida (ES)**

(72) Inventor: **Pomar Gomà, Jesús**
  **25003 Lleida (ES)**

(74) Representative: **Capitán García, Maria Nuria**
  **ARS Privilegium, S.L.**
  **Felipe IV no. 10, bajo iz.**
  **28014 Madrid (ES)**

(54) **SYSTEM AND METHOD FOR DISPENSING PRODUCTS**

(57)    System for dispensing products comprising a hopper for each product i to be dispensed, a plurality of dispensers of product i, a distribution network that connects said dispensers to the corresponding hopper, and an automatic calibration sub-system, the latter system in turn comprising calibration means that take and dispense an amount of product i, a control unit for said calibration means, data processing means, and a communications network that transmits information between the control unit of the calibration means and the data processing means. A method is also provided for dispensing an amount of product I by a dispenser of said dispensing system.

**Fig.1**

EP 3 093 629 A1

**Description**

## FIELD OF THE INVENTION

The present invention relates to the calibration of product dispensing systems, such as those used for feeding animals.

## BACKGROUND OF THE INVENTION

Some animal feeding systems allow feeding each animal or group of animals individually, adjusting the composition of the feed to their needs in real time. These systems have several dispensing elements for small amounts (a few tens of grams) of various products (one dispensing element for each product). Due to cost and robustness reasons, these systems use a volumetric dispensing system.

The accuracy of the dose provided by these volumetric dispensing systems in which the amount to dispense is so small largely depends on the correct calibration of the dispensing system.

The amount dispensed per unit time will depend on several factors, such as density, grain size, adherence, humidity, grain hardness, size and shape of the dispenser, actuator speed, etc. Consequently, calibration must be specific for each dispenser-product pair. The precise determination cannot be predicted easily by mathematical formulae and thus requires an empirical method.

In addition, for each manufacturing batch the product density, hardness, grain size, adherence etc. may vary, such that unless the dispensers are calibrated frequently, the precision thereof could be greatly reduced. This is particularly applicable when changing from dispensing one component to another with different characteristics, such as from granulates to powder.

US4667503 relates to the calibration of a single dispenser that receives products from several hoppers to create a specific mix with continuous dispensing. The method consists in dispensing on a scale specific amounts of each product to be mixed and, depending on the amount of product / dispenser rotation ratios, determining the dispensing rate for each product that will provide the required mix.

DE199338637A1 relates to a system for calibrating multiple dispensers that unload on a single weighing system.

WO9824722A2 describes a method and device for accurately dispensing liquids and solids. The dispenser comprises a calibration system with a weighing scale such that the dispensing system dispenses a specific amount of liquid in a container, comparing the actual amount dispensed to the intended amount and calculating the new value for the number of pump turns for each gram of liquid dispensed.

WO2011042867A describes a method for automatic calibration of a dosing device based on electronic communication of the calibration, specifically by RFID Tags, which contain information on the characteristics of the product for automatic calibration thereof.

A facility such as a farm can have a large number of feeding stations with their corresponding dispensers. Consequently, calibrating each dispenser manually each time there is a change of batch, product type in the hopper, or ambient conditions (temperature, humidity, etc.) could become commercially and practically unfeasible. Therefore, an automatic calibration that can be performed simultaneously on all units and dispensers of the dispensing system would be greatly beneficial.

## DESCRIPTION OF THE INVENTION

The present invention is established and characterised by the independent claims, while the dependent claims describe additional features thereof.

The object of the present invention relates to a product dispensing system of the type comprising:

- one hopper for each product i to be dispensed;
- a plurality of dispensers for product i; and
- a distribution network connecting the dispensers of the product i to their corresponding hopper.

Wherein the dispensing system also comprises a sub-system for automatic calibration of the dispensers of product i which, in turn, comprises:

- calibration means connected to the distribution network for product i, which obtain and dispense an amount of said product i;
- a control unit for said calibration means that determines a control parameter $k_i$ for said product i, at a predefined dispensing rate $v_i$;
- data processing means that adjust a mass flow value of the dispensers of said product i to the value of the control parameter $k_i$ determined by the control unit; and
- a communications network that transmits information between the control unit of the calibration means and the data processing means.

A further object of the present invention is a dispensing method for an amount of product i by one of the dispensers of the above-described dispensing system.

Wherein the dispensing method comprises the following calibration steps:

a) taking an amount of product i by calibration means connected to the distribution network for product i.

b) determining a control parameter $k_i$, for product i, at a predefined dispensing rate $v_i$, where $k_i$ relates the amount of product i dispensed and the dispensing time of a dispensing means for said product i.

Thus, in essence, the value for the control parameter $k_i$ is obtained by finding, for a given dispensing rate $v_i$ of the dispensing means, the relationship between the mass of product i dispensed and the time spent by the dispensing means to dispense it.

    c) adjusting a mass flow value for the dispensers of product i according to the value of the control parameter $k_i$ obtained as described above.

After the calibration steps, the adjusted mass flow value, the predetermine dispensing rate value $v_i$ and the amount of product i to be dispensed by the dispenser of product i can be used to calculate the dispensing time for the dispenser of product i and subsequently operate said dispenser of product i for the calculated dispensing time.

One advantage of the present invention is that for dispensing systems based on metering small amounts of products with physical properties that can change over time, it is possible to detect automatically any changes in said properties that affect the accuracy of the dosing and consequently recalibrate the affected dispensers.

A further advantage is that with the calibration means connected to the distribution network of the dispensing system, it is possible to calibrate several dispensers of the same product i simultaneously, which is particularly useful in systems comprising a high number of feeding units with dispensers where it is not possible to calibrate each dispenser individually due to the high cost of this operation.

Another advantage is that in dispensing systems with multiple feeding units that product products with a variable composition by metering and mixing multiple components using several integrated dispensers, each of these dispensers can be calibrated automatically, thereby improving the accuracy of the composition by increasing the accuracy of the dosing.

Another advantage is that, as the value of the control parameter $k_i$ determined for a dispensing rate $v_i$ is transmitted via a digital communication network between the control unit for the calibration means and the data processing means, and if applicable between the latter means and each one of the feeding units active in the dispensing system, it is possible to increase or reduce the number of dispensers of said system to be recalibrated automatically, simply by adding or removing said dispensers in the data processing means.

Another advantage is that the calibration parameters, such as the dispensing rate $v_i$, applied in the calibration steps can be modified by a program or manually by changing them in the data processing means.

Another advantage is that the accuracy of the dispensing system is increased, obtaining a mixture with a specific composition without having to calibrate independently each dispenser when the dispensing system comprises several feeding stations.

## BRIEF DESCRIPTION OF THE DRAWINGS

These and other features and advantages of the invention will be made clearer in view of the detailed description provided below of a preferred embodiment, provided by way of example in a non-limiting sense, which makes reference to the accompanying figures.

    Figure 1 is a schematic representation of a dispensing system according to the invention.

    Figure 2 is an enlarged view of one of the parts of a feeding unit included in a dispensing system according to the invention.

    Figure 3 is an enlarged view of the parts of some calibration means included in a dispensing system according to the invention.

## DETAILED DESCRIPTION OF A PREFERRED EMBODIMENT OF THE INVENTION

The present invention relates to a system for dispensing products, such as animal feed. A further object of the invention is a method for dispensing an amount of product i by a dispenser for the product i, wherein the product i is any of the product to be dispensed by the system.

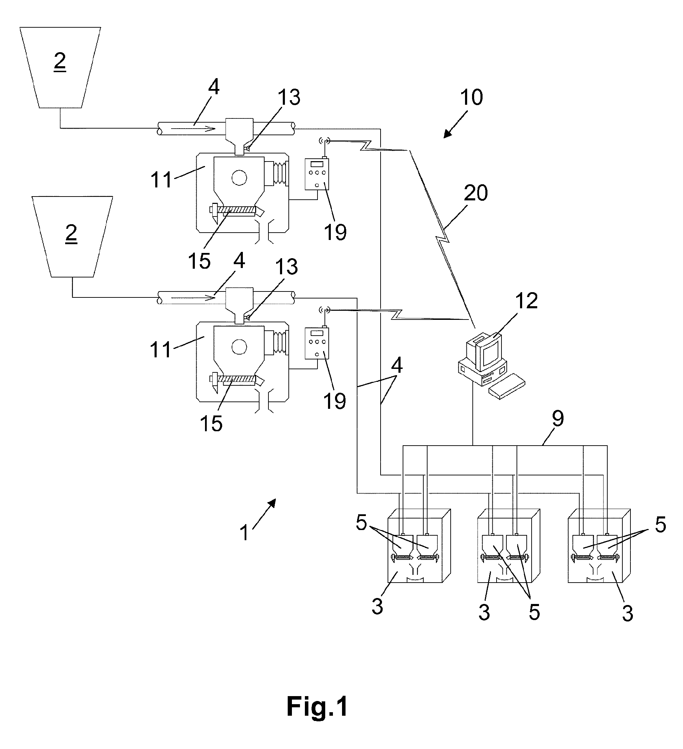

Figure 1 shows a preferred embodiment of the invention. A product dispensing system (1) is shown that comprises a plurality of hoppers (2), each one corresponding to a different product i. For example, the products contained in the hoppers (2) could be different types of food for animals.

The dispensing system (1) also comprises an assembly of feeding units (3) that receive the product i from each hopper (2) through a distribution network (4). Each of these feeding units (3) can comprise one or several different dispensers (5), as required to product specific amounts of a compound with a desired composition by dosing the products contained in each hopper (2).

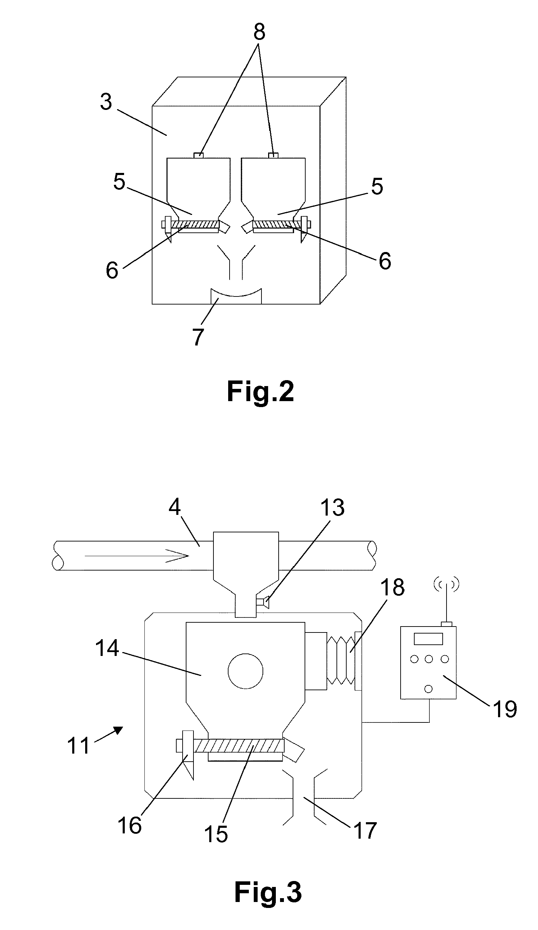

Figure 2 shows an enlarge view of a part of the feeding unit (3) comprised in the dispensing system (1). Each dispenser (5) of product i of the feeding unit (3) includes a worm gear (6) which turns to make the product i fall into a container (7).

Each dispenser (5) of product i also comprises an electronic dispensing device (8) that can operate at a fixed or variable dispensing rate $v_i$ to increase the dispensing accuracy of product i. In a preferred embodiment, all the feeding units (3) comprise the same number of the various dispensers (5).

The dispensing system (1) also has an automatic calibration sub-system (10) that comprises the following elements:

- Calibration means (11) for each hopper (2) of the dispensing system (1),

- A control unit (19) for each one of the calibration means (11),
- Data processing means (12) which, in a preferred embodiment, consist in a personal computer, and
- A communications network (20), preferably wireless, that transmits information between the control units (19) of the calibration means (11) and the data processing means (12).

Figure 3 shows an enlarged view of the calibration mans (11) of the calibration sub-system (10), comprising the following elements:

- An electrovalve(13) that connects the calibration means (11) to the distribution network (4) for a product i;
- A storage container (14) adapted for temporary storage of a mass $M_i$ of product i;
- A dispensing means (15) for the product i, identical to the dispenser (5) to be calibrated, or for which the dispensing relationship between them is known;
- Actuation means (16) for the dispensing means (15) ;
- A discharge duct (17) for the product i used in the calibration process; and
- Means for determining the amount of product i (18) (preferably such as weighing scales) present in the container (14) or dispensed therefrom.

In a specific embodiment, the dispensing means (15) comprises a worm gear.

In addition, each of the control units (19) of the automatic calibration system (10) is in charge of performing 3 main tasks:

(i) reading the sensors (for example, of the means used to determine the amount of product (18)) and activate the actuators (for example, of the electrovalve (13) or the activation means (16)) automatically;
(ii) performing a calculation of the value of a control parameter $k_i$; and
(iii) managing the bidirectional digital communication with the data processing means (10) to send the control parameter $k_i$ calculated and, if applicable, to receive the calibration parameters from the automatic calibration sub-system (10) needed to calculate $k_i$.

The calibration parameters for each product i to be calibrated are as follows:

- $N_i$: number of extractions of product i to be calibrated, for example, performed by the electrovalve (13);
- $M_i$: total mass of product i to be calibrated, obtained from the $N_i$ extractions;
- $D_i$: number of dispensations (repetitions) to be performed by the dispensing means (15);
- $T_{2i}$: duration of each of the $D_i$ dispensations;
- $T_{1i}$: time intervals without dispensation between the

$D_i$ dispensations; and
- $v_i$: dispensing rate, for example, obtained by the rotation speed of the dispensing worm gear (15).

The calibration parameters are needed by the automatic calibration subs-system (10) when the distribution network (4) of the product i is started, as these define the configuration of the calibration steps of the dispensing method that is an object of this invention. Normally, these parameters are determined by the feeder manufacturer in view of the construction thereof.

The calibration parameters can be stored previously in an internal memory (not shown in the figures) of the control unit (19) or can be supplied to this memory through the communications network (20) by the data processing means (12) before starting the calibration steps of the dispensing method described below.

The dispensing method for an amount of product i performed by a dispenser (5) of the above-described dispensing system (1) comprises the following calibration steps:

a) obtaining an amount of product i by the calibration means (11) of the automatic calibration system (10).

In this step the control unit (19) sends a command to obtain or extract the amount of product i from the distribution network (4) to the storage container (14) of said calibration means (11) corresponding to the product i. In a specific embodiment, this extraction is performed with an electrovalve (13).

The amount of product i to extract is determined by one of the calibration parameters, the mass $M_i$, and is performed by the weighing process performed by the means (18) for determining the amount of product.

In a specific embodiment, said extraction of the product i is performed by extracting $N_i$ amounts of product i until reaching a mass $M_i$ of product i in the storage container (14).

During this step the control unit (19) controls the actuation of the electrovalve (13) and the means (18) for determining the amount of product, according to the extraction of the $N_i$ amounts of product i until reaching the mass $M_i$ of product i. The means (18) for determining the amount of product inform the control unit (19) when the mass $M_i$ of product i has been reached in the storage container (14), in order to stop the extraction of the $N_i$ amounts of product i.

Advantageously, this extraction method allows obtaining samples of product i that can have different properties, providing a more representative sample of product i with which to perform the calibration.

b) Determining a control parameter $k_i$, of said product i, for a predefined dispensing rate $v_i$, that relates the amount of product i dispensed and the dispensing time of the corresponding dispensing means (15) for said product i.

As stated before, according to the calibration parameters previously stored in the memory of the control unit (19) or received therein from the data processing means (12), for the type of product i to be calibrated, the dispensing rate $v_i$ and the amount of product i to be dispensed are determined.

The amount of product i, that is, the mass $M_i$ included in the container (14), is then dispensed in $D_i$ dispensations with duration $T_{2i}$ at time intervals $T_{1i}$, by the dispensing means (15) of the calibration means (11).

As stated above, preferably the dispensing means (15) is the same as the dispenser (5), or the dispensing relationship of the dispensing means (15) and the dispenser (5) is known.

In a specific embodiment, the dispensing means (15) performs the dispensing using a worm gear that turns at the predefined dispensing rate $v_i$.

In this step the control unit (19) controls the actuation of the activation means (16) of the dispensing means (15) and the means (18) for determining the amount of product, according to the dispensation of the mass $M_i$ of product i in the $D_i$ dispensations, as discussed above.

Thus, the weights of the mass $M_i$ of product i placed in the storage container (14) after each of the $D_i$ dispensations are recorded by the means (18) for determining the amount of product and saved in the memory of the control unit (19). Subsequently the control unit (19) determines the value of the control parameter $k_i$ as the mean or average value of the ratios between the mass $w_i$ dispensed in each of the $D_i$ dispensations and the duration $T_{2i}$ of the corresponding dispensation.

$$k_i = 1/n \sum_{n=1}^{n} w_i / T_{2i}$$

where n is $D_i$.

Thus the value is calculated of the control parameter $k_i$, which reflects the mass flow (kg/s) supplied by the dispensing means (15) when the worm gear turns at the predefined rate $v_i$.

The value of the control parameter $k_i$, determined by the control unit (19), and the value of the predefined dispensing rate $v_i$, are sent to the data processing means (12) in a message via the digital communications network (20).

c) Adjusting a value of the mass flow of the dispensers (5) of the product i, of the feeding units (3) active in the dispensing system (1), to the value of the control parameter $k_i$ determined by the control unit (19) of the automatic calibration sub-system (10).

In this step, once the data processing means (12) has received through the communications network (20) the message including the value of the control parameter $k_i$ for the predetermined dispensing rate $v_i$, said processing means (12) determine whether the value of the control parameter $k_i$ received differs more than 5% from the mass flow value being used at the time by the dispensers (5) that supply the product i to the active feeding (3). If so, the data processing means (12) adjust or match the mass flow value of the dispensers (5) to the value of $k_i$.

In a specific embodiment, the calibration steps described above are performed each time the hopper (2) of product i is filled.

Subsequently, the data processing means (12) identify which feeding units (3) are active at the time and send a message through a second communications network (9) with the corresponding adjusted mass flow values and the predefined dispensing rate $v_i$ to each of said units.

In said feeding units (3) the corresponding electronic dispensing devices (8), in view of the adjusted mass flow value, the predefined dispensing rate $v_i$, and the amount of product i to be dispensed in each dispenser (5) of product i, calculate the dispensing ties for the corresponding dispensers (5) of product i and then operate these for the calculated dispensing time.

In this way the dispensing system (1) is calibrated, increasing the accuracy thereof for the type of product and the amounts of product to be dosed.

## Claims

1. Product dispensing system (1) comprising:

   - a hopper (2) for each product i to be dispensed,
   - a plurality of dispensers (5) of product i,
   - a distribution network (4) that connects the dispensers (5) of product i to the hopper (2) of product i,

   **characterised in that** it comprises an automatic calibration sub-system (10) which, in turn, comprises:

   - calibration means (11) connected to the distribution network (4) of product i, which obtain and dispense an amount of product i,
   - a control unit (19) for the calibration means (11) that determines a control parameter $k_i$ for said product i, at a predefined dispensing rate $v_i$,
   - data processing means (12) that adjust a mass flow value for the dispensers (5) of said product i to the value of the control parameter $k_i$ determined by the control unit (19), and
   - a communications network (20) that transmits information between the control unit (19) of the calibration means (11) and the data processing means (12).

2. System according to claim 1, wherein the calibration means (11) of the automatic calibration sub-system (10) comprise:

- a storage container (14) adapted to temporarily store a mass $M_i$ of product i,
- a dispensing means (15) for product i, which is the same as the dispenser (5) or for which the dispensing relationship between these is known,
- actuation means (16) for the dispensing means (15), and
- means (18) for determining the amount of product dispensed.

3. System according to claim 2, wherein the dispensing means (15) of product i comprise a worm gear that turns at the predefined dispensing rate $v_i$ for said product i.

4. System according to claim 1, wherein the calibration means (11) are connected to the distribution network (4) of product i through an electrovalve (13).

5. System according to claims 2 and 4, wherein the control unit (19) control the actuation of the electrovalve (13) and the means (18) for determining the amount of product in view of the extraction of $N_i$ amounts of product i until reaching the mass $M_i$ of product i.

6. System according to claim 2, wherein the control unit (19) controls the actuation of the activation means (16) and the means (18) for determining the amount of product according to the dispensation of the mass $M_i$ of product i in $D_i$ dispensations with duration $T_{2i}$ at time intervals $T_{1i}$.

7. System according to claims 5 and 6, wherein the values of $v_i$, $N_i$, $M_i$, $D_i$, $T_{2i}$ and $T_{1i}$ are calibration parameters for product i, and are previously stored in the control unit (19), or are supplied to said control unit (19) by the data processing means (12).

8. Method for dispensing an amount of product i, by a dispenser (5) of a dispensing system (1), **characterised in that** the method comprises the following calibration steps:

a) taking an amount of the product i by the calibration means (11) connected to a distribution network for product i,
b) determining a control parameter $k_i$ for said product i, at a predefined dispensing rate $v_i$, where $k_i$ relates the dispensed amount of product i and the dispensing time of a dispensing means (15) for said product i, and
c) adjusting the mass flow value for the dispensers (5) of said product i according to the value of the control parameter $k_i$ determined in step b).

9. Method according to claim 8, wherein step a) is performed by extracting $N_i$ amounts of product i until obtaining a mass $M_i$ of product i in a storage container (4) of the calibration means (11) corresponding to product i.

10. Method according to claim 8, wherein step b) comprises the following sub-steps:

b.1) dispensing the amount of product i in $D_i$ dispensations with duration $T_{2i}$ at time intervals $T_{1i}$, by the dispensing means (15) of the calibration means (11), and
b.2) determining the control parameter $k_i$ as the value measured for the ratios of the dispensed mass $w_i$ in each of the $D_i$ dispensations and the corresponding dispensation duration $T_{2i}$.

11. Method according to any of claims 8 to 10, wherein steps a) to c) are performed each time a hopper (2) is filled with product i.

12. Method according to claim 8, wherein the mass flow value for the dispensers (5) of product i is adjusted to the value of the control parameter $k_i$ when said values differ by more than 5%.

13. Method according to claims 8 or 12, which additionally comprises the following steps:

d) calculating, from the mass flow adjusted in step c), the predefined dispensing rate $v_i$, and an amount of product i to be dispensed by the dispenser (5) of product i, a dispensing time for said dispenser (5) of product i, and
e) actuating the dispenser (5) of product i for the dispensing time calculated in step d).

14. Method according to claim 8, wherein the dispensing means (15) used in step b) is the same as the dispenser (5) of the dispensing system (1), or the dispensing relationship between the two is known.

15. Method according to claims 8 or 14, wherein the dispensing means (15) used in step b) comprises a worm gear that turns at the predefined dispensing rate $v_i$.

**Fig.1**

**Fig.2**

**Fig.3**

Europäisches
Patentamt

European
Patent Office

Office européen
des brevets

## EUROPEAN SEARCH REPORT

Application Number

EP 15 38 2246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 426 724 A1 (ALFA LAVAL AGRI INT [SE]) 15 May 1991 (1991-05-15) * column 4, lines 8-39; figure 1 * * column 5, lines 4-18 * * column 5, lines 29-39 * * column 6, lines 3-7 * ----- | 1-15 | INV. G01F25/00 A01K5/02 G01F11/46 G01F15/00 B65B37/20 G01G19/00 |
| A,D | DE 199 38 637 A1 (FOERSTER MARTIN [DE]) 11 January 2001 (2001-01-11) * the whole document * ----- | 1,8 | G01F13/00 G01F15/02 |
| A,D | US 4 667 503 A (LOOS BRUCE J [US]) 26 May 1987 (1987-05-26) * the whole document * ----- | 1,8 | |
| A | EP 0 885 560 A1 (PELLONPAJA OY [FI]) 23 December 1998 (1998-12-23) * column 2, lines 15-47; figure 1 * ----- | 1,8 | |
| A | US 5 433 103 A (KRAMLINGER PHILIP J [US]) 18 July 1995 (1995-07-18) * column 2, line 53 - column 4, line 35; figures 1, 2 * ----- | 1,8 | TECHNICAL FIELDS SEARCHED (IPC) G01F A01K B65B G01G |

The present search report has been drawn up for all claims

| Place of search | Date of completion of the search | Examiner |
|---|---|---|
| The Hague | 10 November 2015 | Tomasoni, Flora |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 38 2246

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2015

| Patent document cited in search report | | Publication date | Patent family member(s) | | Publication date |
|---|---|---|---|---|---|
| EP 0426724 | A1 | 15-05-1991 | DE | 68924427 D1 | 02-11-1995 |
| | | | DE | 68924427 T2 | 07-03-1996 |
| | | | EP | 0426724 A1 | 15-05-1991 |
| | | | WO | 9000384 A1 | 25-01-1990 |
| DE 19938637 | A1 | 11-01-2001 | NONE | | |
| US 4667503 | A | 26-05-1987 | CA | 1271331 A | 10-07-1990 |
| | | | US | 4667503 A | 26-05-1987 |
| EP 0885560 | A1 | 23-12-1998 | AT | 212501 T | 15-02-2002 |
| | | | CA | 2238594 A1 | 18-12-1998 |
| | | | DE | 69803629 D1 | 14-03-2002 |
| | | | DE | 69803629 T2 | 14-08-2002 |
| | | | DK | 0885560 T3 | 25-03-2002 |
| | | | EP | 0885560 A1 | 23-12-1998 |
| | | | JP | H119127 A | 19-01-1999 |
| | | | NO | 982796 A | 21-12-1998 |
| | | | US | 6067932 A | 30-05-2000 |
| US 5433103 | A | 18-07-1995 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4667503 A
- DE 199338637 A1
- WO 9824722 A2
- WO 2011042867 A